# EUROPEAN PATENT APPLICATION

(11) **EP 4 621 479 A1**
(43) Date of publication of application: **24.09.2025**
(21) Application number: 25163603.1
(22) Date of filing: 13.03.2025
(51) Int. Cl.: G02B 27/28

(54) **NON-CRYSTALLINE, BROADBAND POLARIZERS WITH HIGH EXTINCTION RATIO AND HIGH POWER HANDLING**

(30) Priority: 19.03.2024 US 202463567344 P
(71) Applicant: Thorlabs, Inc., Newton, NJ 07860 (US)
(72) Inventor: Kirchner, Matthew, c/o Thorlabs, Inc., 43 Sparta Ave, Newton, NJ 07860 (US); Domingue, Scott, c/o Thorlabs, Inc., 43 Sparta Ave, Newton, NJ 07860 (US)
(74) Representative: Grättinger Möhring von Poschinger Patentanwälte Partnerschaft mbB

(57) **Abstract**

A polarizer design that combines many of the desirable qualities of crystal polarizers with many of the desirable qualities of beamsplitting cube polarizers fabricated with high power handling glasses and thin film coating manufacture processes. Namely, the present design achieves a high extinction ratio (>100,000:1 Tp/Ts) over a broad optical bandwidth (Δλ/λ > 0.1), with high power and pulse energy handling with the additional benefits of all four input/output ports being high optical quality surfaces (different from many crystal polarizers), high transmission (Tp > 98%), and low dispersion in the thin film and low bulk material dispersion (group velocity dispersions of 72, 21, and -22 fs²/mm at 500, 1000, and 1500 nm respectively).

## Description

### CROSS REFERENCE TO RELATED APPLICATIONS

This application claims the benefit of U.S. Provisional Patent Application No. 63/567,344 filed on March 19, 2024. The disclosures of U.S. Provisional Patent Application 63/567,344 are hereby incorporated by reference.

### TECHNICAL FIELD

The present disclosure generally relates to polarizers, and more particularly to non-crystalline, broadband polarizers with high extinction ratio and high power handling.

### BACKGROUND

Many optics applications require polarizers with high extinction ratio simultaneously with broad bandwidth, such as: optical setups for broad bandwidth and/or tunable wavelength lasers or light sources, broad band optical isolators, fluorescence lifetime measurements, transient absorption spectroscopy, vibrational and Raman spectroscopy, and multiphoton microscopy. The typical polarizer used in these applications is made of a crystal material, generally calcite, but also including Yttrium orthovanadate, Magnesium Fluoride, Quartz, and alpha-Barium Borate. Calcite, the most commonly used crystal polarizer, is a mined material and has material properties that make it an excellent polarizer with high extinction ratio, but it has drawbacks due to imperfections in the natural crystal, as well as the cleavage planes that make polishing the material to high wavefront quality difficult or impossible on the reflection-output faces. In addition, impurities in the natural calcite crystal can lead to reduced average power or peak power handling capabilities which make the polarizers unsuitable for some high average power or high peak power applications.

In particular, high-power CW, nanosecond, picosecond, and femtosecond lasers used in applications for laser materials processing generally cannot use calcite polarizers and rely instead on optically contacted polarizing beamsplitting (PBS) cubes made of high-power handling synthetic materials like fused silica along with high damage threshold dielectric thin films. The typical PBS cube has an internal angle of incidence (AOI) of approximately 45 degrees, which limits the bandwidth of high transmission and medium extinction ratio to approximately Δλ/λ < 0.05 for commonly-used thin film materials (SiO₂ low index layer and HfO₂, Ta₂O₅, or Nb₂O₅ for the high index layer, although other thin films may be used). Such polarizers commonly specify extinction ratio of a few hundred to a few thousand to 1, which is good for power control, but is not suitable for high power isolators, which require >100,000:1 extinction ratio. Additionally, these polarizers are generally only specified at one laser wavelength, rather than a wavelength range, meaning a polarizer specified at 1064 nm will not have optimal performance at 1030 nm (both commonly-used wavelengths for high power laser systems), and have typical transmission of approximately Tp > 95%.

Alternatively, broad bandwidth performance can be attained by changing the PBS cube substrate material to a dense glass with higher refractive index (N-SF1, for example) with refractive indexes around 1.6 to 1.8. The high index substrate preserves the internal 45-degree AOI of the polarizing thin film while increasing the bandwidth relative to the fused silica substrate version. These types of polarizers achieve moderate extinction ratios (>1,000:1 Tp/Ts) over a broad bandwidth Δλ/λ > 0.3, but are generally much lower power handling because of the nature of the substrate material, which has higher impurities, more bulk absorption, and higher nonlinear refractive index. These high index polarizing beamsplitter cubes are also cemented together with an optical adhesive, rather than optically contacted, which has even lower damage threshold than the substrate or the thin film materials. Additionally, the high index dense glasses generally have unspecified amounts of internal birefringence, which can spoil the extinction ratio of a PBS, even if the polarizing coating can support very high extinction ratio.

Therefore, there is a long-felt need for a polarizer design that combines many of the desirable qualities of crystal polarizers with many of the desirable qualities of beamsplitting cube polarizers fabricated with high power handling glasses and thin film coating manufacture processes, but without the above noted shortcomings.

### SUMMARY

An embodiment of the present disclosure provides a polarizer design that combines many of the desirable qualities of crystal polarizers with many of the desirable qualities of beamsplitting cube polarizers fabricated with high power handling glasses and thin film coating manufacture processes. Namely, the present design achieves a high extinction ratio (>100,000:1 Tp/Ts) over a broad optical bandwidth (Δλ/λ > 0.1), with high power and pulse energy handling with the additional benefits of all 4 input/output ports being high optical quality surfaces (different from many crystal polarizers), high transmission (Tp > 98%), and low dispersion in the thin film and low bulk material dispersion (group velocity dispersions of 72, 21, and -22 fs²/mm at 500, 1000, and 1500 nm respectively).

An embodiment of the present disclosure provides a polarization beam splitter constructed with a thin film polarizing coating between a first and second optically contacted glass pieces; wherein the thin film coating provides a polarizing range of Δλ/λ > 0.2 with an extinction ratio greater than 10,000:1, and a polarizing range of Δλ/λ > 0.1 with an extinction ratio greater than 100,000: 1; and wherein the substrate glass is a low birefringence material that is configured to provide a peak extinction ratio of > 100,000: 1.

### BRIEF DESCRIPTION OF THE DRAWINGS

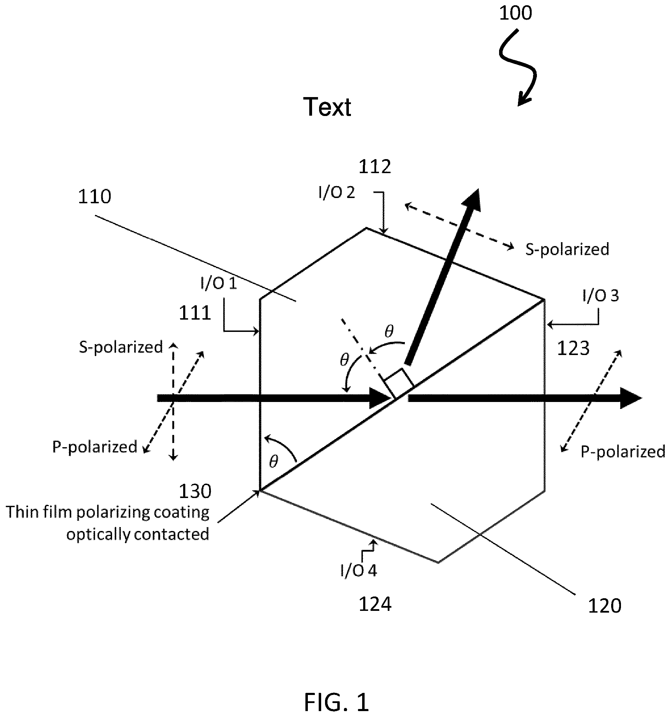

FIG. 1 illustrates a polarizer according to an embodiment of the present disclosure.

### DETAILED DESCRIPTION

The description of illustrative embodiments according to principles of the present disclosure is intended to be read in connection with the accompanying drawings, which are to be considered part of the entire written description. In the description of embodiments of the disclosure herein, any reference to direction or orientation is merely intended for convenience of description and is not intended in any way to limit the scope of the present disclosure. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the disclosure are illustrated by reference to the exemplified embodiments. Accordingly, the disclosure expressly should not be limited to such exemplary embodiments illustrating some possible nonlimiting combination of features that may exist alone or in other combinations of features; the scope of the disclosure being defined by the claims appended hereto.

This disclosure describes the best mode or modes of practicing the disclosure as presently contemplated. This description is not intended to be understood in a limiting sense, but provides an example presented solely for illustrative purposes by reference to the accompanying drawings to advise one of ordinary skill in the art of the advantages and construction of the certain embodiments. In the various views of the drawings, like reference characters designate like or similar parts.

It is important to note that the embodiments disclosed are only examples of the many advantageous uses of the innovative teachings herein. In general, statements made in the specification of the present application do not necessarily limit any of the various claimed disclosures. Moreover, some statements may apply to some inventive features but not to others. In general, unless otherwise indicated, singular elements may be in plural and vice versa with no loss of generality.

An embodiment of the present disclosure uses synthetic fused silica with specified low birefringence (< 2 nm/cm in the preferred embodiment, although values of < 5 nm/cm could be used depending on the size of the polarizer) in combination with a high damage threshold thin-film coating and a unique geometry to produce a polarizing beamsplitting optic with the following characteristics:
- Theoretical maximum extinction ratio Tp/Ts > 1,000,000:1
- Verified with measurements of extinction ratio Tp/Ts > 100,000:1
- Theoretical bandwidth with > 10,000:1 extinction ratio of Δλ/λ ~ 0.4
- Theoretical bandwidth for > 100,000:1 extinction ratio of Δλ/λ ~ 0.3
- Tp > 98% over full bandwidth Δλ/λ ~ 0.4
- Polarizing Thin Film Group Delay Dispersion: < 50 fs² (over full bandwidth, for both reflected S polarization, and transmitted P polarization)
- Transmitted Wavefront Error on all input/output faces < λ/10 at 633 nm
- Surface Quality on all input/output faces of 20-10 (super-polishing could improve this to 10-5)
- Laser induced damage thresholds:
   - CW: > 20,000 W/cm CW at 1070 nm (alternative unit: >5 MW/cm²)
   - Pulsed: > 5 J/cm² at 1030 nm, 100+ ps, 10+ kHz

FIG. 1 shows a polarizer according to an embodiment of the present disclosure. The polarizer 100 includes a first glass piece 110, a second glass piece 120, and a thin film polarizing coating 130 coated on the interface surfaces of the first and second glass pieces, such that the two glass pieces are optically contacted. In one embodiment, the thin film polarizing coating includes a plurality of layers of alternating high and low refractive indices. The first glass piece includes an input/output face (I/O 1) 111 and an input/output face (I/O 2) 112, and the second glass piece includes an input/output face (I/O 3) 123 and an input/output face (I/O 2) 124. FIG. 1 shows a polarizer geometry and beam example according to one embodiment. The S- and P-polarization states refer to the vertical and horizontal orientations in a typical laboratory frame. I/O 1 through I/O 4 are the entrance and/or exit faces of the polarizer. In one embodiment, the input/output face (I/O 1) 111 is parallel to the input/output face (I/O 3) 123, and the input/output face (I/O 2) 112 is parallel to the input/output face (I/O 4) 123. Due to the symmetry of the design, the polarizer can be used in other orientations (i.e., rotated 180 degrees) or with bi-directional beams (for example, as the output polarizer in an optical isolator), and all input/output surfaces of the device have high surface quality (i.e., 20-10 or 10-5 super-polished).

In one embodiment of the present disclosure, the relaxation of the internal thin film angle of incidence, θ in FIG. 1, from a fixed design angle of 45 degree to a free parameter is what allows for broad bandwidth polarization extinction ratio performance with synthetic fused silica substrates (glass pieces). The angle of incidence θ is set close to or at Brewster's angle for the index difference between the high index and low index layers. Additionally, the low index layer refractive index is substantially similar to the refractive index of the substrate, creating a situation where there is virtually no reflection from the thin film stack for the p-polarization state, and the thin film stack is designed to have very high reflection for the s-polarization state. This can be achieved with a traditional quarter wave stack reflector, or with a more complicated thin film designs such as chirped layers or numerically optimized designs.

One of the advantages of this broadband polarizer topology is the choice of bulk material. Bulk damage will occur inside the optical substrate when short pulses with sufficient peak power (approximately pulse energy divided by pulse duration) collapse into optical filaments due to nonlinear processes in the material. The lower nonlinear refractive index of fused silica (n2 of 3.2×10⁻¹⁶ cm²/W) compared to the dense flint glasses used in typical broad band polarizers (n2 of 30×10⁻¹⁶ cm²/W for N-SF10), increases the critical power required to induce filamentation inside of the optical substrate. Therefore, the use of synthetic fused silica increases the power handling of a polarizer relative to high index based polarizers due to an increase in the threshold for filamentation.

The choice of optical material is also critical to the polarization extinction ratio and damage threshold performance, since not all synthetic fused silica materials feature low absorption and low-intrinsic birefringence. Low absorption (<300 ppb metallic impurities and hydroxyl (OH) content supporting the appropriate wavelength range of operation, where low OH is used for visible as well as near and short wave infrared, and high OH for some ultraviolet applications) is required for high optical power handling so as to keep from overheating and damaging the optic. Further, inhomogeneous heating of the optic from non-uniform laser beams can diminish the polarization extinction ratio through an increase in the optical birefringence through inhomogeneous stresses induced through thermal expansion of the optical substrate. The polarization extinction ratio also critically depends on the optical substrate itself not modifying the polarization state of incident light. So, optical substrates with low-intrinsic birefringence (specify < 2 nm/cm) are required. Lastly, the optical material choice informs whether or not the two prisms composing the polarizing beamsplitter can be optically contacted or requires adhesive. Adhesives, such as optical cement or epoxy, always compromise the optical power handling as they have higher optical absorptions than most bulk glasses and can often contain contaminants from the manufacturing process that also increase absorption and reduce optical power handling.

Another benefit of this geometry is that all entrance and exit faces are near normal (zero degrees) angle of incidence. This is advantageous for the design of polarization insensitive AR coatings over the broad bandwidth of operation. For example, a 6-layer AR coating can easily achieve Ravg < 0.5% over the entire operation bandwidth of Δλ/λ ~ 0.4. The optically-contacted, internal polarizer coating could also be applied between two flat substrates without the hexagonal geometry, which would retain the key advantages of this embodiment (high extinction ratio, high power handling, broad bandwidth, low group delay dispersion, and low wavefront distortion), with the drawback of a more complicated AR coating on the input and output faces to account for the non-normal angle of incidence.

In summary, the present disclosure provides the performance metrics listed below simultaneously, which are not achieved by any other commercial or research optic known to a skilled person in the art; and therefore, provides a differentiated and novel optic offering to the market.
- High CW damage threshold
   - low absorption optical material
   - optical contacting between the two prisms
- High Pulsed damage threshold through optical material selection with high threshold for filamentation
- High polarization extinction ratio
   - thin film design
   - optic geometry (specifically not requiring θ = 45 degrees)
   - optical material selection for low intrinsic birefringence and low absorption
- Broadband polarization extinction ratio
   - thin film design
   - optic geometry design
- Low Group Delay Dispersion
   - thin film design
   - low group velocity dispersion optical materials
- Low Wavefront Distortion and High Surface Quality at 4 optical entrance/exit faces
   - optic geometry design
   - optical material selection allowing for high quality polishing on all faces

In addition to the natural broad bandwidth with a quarter wave stack polarizing film (which inherently is low group delay dispersion (GDD) over the reflection bandwidth), it is possible to design the center polarizing film in a more complicated numerical optimization approach to have much broader bandwidths (exceeding one optical octave of bandwidth), while maintaining 10,000: 1 or 100,000: 1 extinction ratio. Such broad bandwidth designed films often do not have low GDD in reflection, but that is not a requirement of many applications that could benefit from such a broadband polarizing beamsplitter.

While the present disclosure describes at some length and with some particularity with respect to the several described embodiments, it is not intended that it should be limited to any such particulars or embodiments or any particular embodiment, but it is to be construed so as to provide the broadest possible interpretation in view of the related art and, therefore, to effectively encompass various embodiments herein. Furthermore, the foregoing describes various embodiments foreseen by the inventor for which an enabling description was available, notwithstanding that modifications of the disclosure, not presently foreseen, may nonetheless represent equivalents thereto.

## Claims

1. A polarization beam splitter (100) constructed with a thin film polarizing coating (130) between a first and second optically contacted substrate glass pieces (110, 120);
wherein the thin film coating (130) provides a polarizing range of Δλ/λ > 0.2 with an extinction ratio greater than 10,000:1, and a polarizing range of Δλ/λ > 0.1 with an extinction ratio greater than 100,000:1; and
wherein the substrate glass is a low birefringence material that is configured to provide a peak extinction ratio of > 100,000:1.

2. The polarizer of claim 1, wherein the substrate glass and thin film materials are chosen to be low loss dielectric materials to enable power handling of > 20,000 W/cm CW at 1070 nm (alternative unit: > 5 MW/cm² at 1070 nm), and pulsed laser damage threshold of > 5 J/cm² at 1030 nm, 100+ ps, 10+ kHz.

3. The polarizer of claim 1, wherein a geometry of the polarizer is selected to provide an internal angle of incidence (AOI) near a Brewster's angle for the internal thin film coating materials, and an entrance and exit angle of approximately zero degrees.

4. The polarizer of claim 1, wherein the substrate glass is a fused silica with < 5 nm/cm of internal birefringence, < 300 ppb metallic impurities, and < 20 ppm hydroxyl (OH) content.

5. The polarizer of claim 4, wherein the thin film is comprised of SiO₂ as the low index layer, and HfO₂, Ta₂O₅, Nb₂O₅, or TiO₂ as the high index layer.

6. The polarizer of claim 2, wherein a geometry of the polarizer is selected to provide an internal angle of incidence (AOI) near a Brewster's angle for the internal thin film coating materials, and an entrance and exit angle of approximately zero degrees.

7. The polarizer of claim 2, wherein the substrate glass is a fused silica with < 5 nm/cm of internal birefringence, < 300 ppb metallic impurities, and < 20 ppm hydroxyl (OH) content.

8. The polarizer of claim 7, wherein the thin film is comprised of SiO₂ as the low index layer, and HfO₂, Ta₂O₅, Nb₂O₅, or TiO₂ as the high index layer.
